# EUROPEAN PATENT APPLICATION

(11) **EP 2 639 762 A1**
(43) Date of publication of application: **18.09.2013**
(21) Application number: 11840095.1
(22) Date of filing: 02.11.2011
(51) Int. Cl.: G06T 7/00

(54) **IMAGE VERIFICATION APPARATUS**

(30) Priority: 08.11.2010 JP 2010250205
(71) Applicant: NEC Corporation, Tokyo 108-8001 (JP)
(72) Inventor: HARA Masanori, Tokyo 108-8001 (JP); SATO Nina, Tokyo 108-8001 (JP)
(74) Representative: Betten & Resch
(86) International application number: PCT/JP2011/075322
(87) International publication number: WO 2012/063708

(57) **Abstract**

A feature-point matching unit calculates a first matching score between first and second biological patterns, based on: first and second feature-point data indicating first and second feature-point sets of first and second ridge patterns included in first and second images of first and second biological patterns respectively, and generates a corresponding feature-point list by extracting a corresponding feature-point set being a set of corresponding feature-points between the first and second feature point sets. A non-linear image conversion unit performs a first non-linear conversion making the first image approximate to the second based on the corresponding feature-point list. A feature point matching unit calculates a second matching score between the first and second biological patterns based on the first image after the first non-linear image conversion and the second. A high matching accuracy is achieved in fingerprint or palmprint matching using a low-quality image.

## Description

### Technical Field

The present invention relates to an image matching device, an image matching method, and a program, and in particular, relates to an image matching device, an image matching method, and a program for executing matching of such biological pattern images as a fingerprint image and a palmprint image.

### Background Art

Fingerprints, which include striped ridges, have characteristics of permanence over entire life and uniqueness to each individual and have long been used for criminal investigations. In particular, matching which uses latent fingerprints left at crime scenes is an effective investigation means. In recent years, many police agencies have been introduced fingerprint matching systems using computers. For example, Patent Literature 1 (Japanese Patent Application Publication JP2010-225102A) discloses a striped pattern image examination device for supporting the judgement of identicalness and difference between fingerprint images.

In conventional fingerprint matching, feature-point matching which uses a ridge ending or a ridge bifurcation of fingerprint ridges is widely used as mentioned in "4.3 Minutiae-Based method" of Non Patent Literature 1 (Handbook of Fingerprint Recognition, Springer, 2003). A ridge ending or a ridge bifurcation of fingerprint ridges is called as a feature point of a fingerprint or a Minutia.

In a case of matching between high-quality fingerprint images like exemplar fingerprint images, high matching accuracy can be guaranteed since an adequate number of feature points can be extracted from both fingerprint images even with the use of conventional technologies.

When one fingerprint image to be matched is a latent fingerprint image with poor image quality however, the area where feature points in the latent fingerprint image can be extracted is small, so that an adequate number of feature points cannot be extracted from the latent fingerprint image. As a result, it is difficult to achieve high matching accuracy with the use of conventional technologies.

To solve the above problem, various techniques have been proposed.

For example, a manual input method is known. In this method, a latent fingerprint examiner manually inputs feature points of a low-quality latent fingerprint image instead of automatic extraction of feature points. However, a heavy burden is placed on the latent fingerprint examiner since the man-hour of manually inputting feature points is large.

In recent years, some methods of automatically or semi-automatically removing noises of a latent fingerprint image have been proposed.

Methods of automatically removing noise are proposed in Patent Literature 2 and 3 for example. However, the effect is limited since not all latent fingerprint images have noise that can be removed by automatic professing.

In Patent Literature 4 and 5, methods for semi-automatically removing noise are proposed. With the semi-automatic removing method however, manpower of latent fingerprint examiners is required, though the man-hour is reduced to some extent, so that this disadvantage is not yet solved.

### Citation List

### Patent Literature

[PTL 1] Japanese Patent Application Publication JP-P2010-225102A
[PTL 2] Japanese Patent Application Publication JP-P2008-040693A
[PTL 3] Japanese Patent Application Publication JP-P2008-065390A
[PTL 4] Japanese Patent Application Publication JP-P2009-223562A
[PTL 5] Japanese Patent Application Publication JP-P2008-225764A

### Non-Patent Literature

[NPL 1] Handbook of Fingerprint Recognition, Springer, 2003

### Summary of Invention

As explained above, it is difficult to extract an adequate number of feature points from a low quality latent fingerprint image, so that a high accuracy matching cannot have been expected when a latent fingerprint image is used. Therefore, an object of the present invention is to provide an image matching device, an image matching method, a program and a storage medium for achieving a high matching accuracy in a fingerprint matching or a palmprint matching using a low quality image.

According to a first aspect of the present invention, an image matching device includes: a data storage section; a feature point matching section; and a non-linear image conversion section. The data storage section stores: a first feature point data which indicates a first set of feature points which are on a first ridge pattern included in a first image of a first biological pattern; and a second feature point data which indicates a second set of feature points which are on a second ridge pattern included in a second image of a second biological pattern. The feature point matching section calculates a first matching score between the first biological pattern and the second biological pattern based on the first feature point data and the second feature point data, and generates a corresponding feature point list which indicates a corresponding feature point set by extracting a set of corresponding feature points between the first set of feature points and the second set of feature points as the corresponding feature point set. The non-linear image converting section performs a non-linear first image conversion which makes the first image approximate to the second image based on the corresponding feature point list. The feature point matching means calculates a second matching score between the first biological pattern and the second biological pattern based on the first image after the non-linear first image conversion and the second image.

According to a second aspect of the present invention, an image matching method includes: a step of calculating a first matching score between a first biological pattern and the second biological pattern based on: a first feature point data which indicates a first set of feature points of a first ridge pattern included in a first image of a first biological pattern; and a second feature point data which indicates a second set of feature points of a second ridge pattern included in a second image of a second biological pattern; a step of storing a first matching score; a step of extracting a set of feature points which are corresponding points between the first set of feature points and the second set of feature points as a corresponding feature point set and generating a corresponding feature point list which indicates the corresponding feature point set; a step of performing a non-linear first image conversion which makes the first image approximate to the second image based on the corresponding feature point list; a step of calculating a second matching score between the first biological pattern and the second biological pattern based on the first image after the non-linear first image conversion and the second image; and a step of storing the second matching score.

According to a third aspect of the present invention, a storage medium records a computer program for making a computer execute the image matching method according to the above image matching method.

According to the present invention, an image matching device, an image matching method, a program, and a storage device which make it possible to achieve a high matching accuracy in a fingerprint matching or a palmprint matching using a low-quality image.

### Brief Description of Drawings

Fig. 1 is a schematic diagram showing an entire configuration of an image matching device according to a first exemplary embodiment of the present invention;
Fig. 2 is a functional block diagram showing functions which the image matching device achieves;
Fig. 3A is a flowchart of an image matching method according to the first exemplary embodiment;
Fig. 3B is a flowchart of an image matching method according to the first exemplary embodiment;
Fig. 4A shows a latent fingerprint image to be inputted to an image matching device;
Fig. 4B shows an exemplar fingerprint image to be inputted to an image matching device;
Fig. 5A shows feature points extracted from a latent fingerprint image so that the feature points are superimposed onto the latent fingerprint image;
Fig. 5B shows directional distribution extracted from a latent fingerprint image so that the directional distribution is superimposed onto the latent fingerprint image;
Fig. 5C shows an example of direction coding;
Fig. 5D shows a skeleton and a ridge settlement region extracted from a latent fingerprint image, so that the skeleton and the ridge settlement region are superimposed onto the latent fingerprint image;
Fig. 6A shows feature points extracted from an exemplar fingerprint image so that the feature points are superimposed onto the exemplar fingerprint image;
Fig. 6B shows directional distribution extracted from an exemplar fingerprint image so that the directional distribution is superimposed onto the exemplar fingerprint image;
Fig. 7 shows a matching result between a latent fingerprint image and an exemplar fingerprint image;
Fig. 8 shows a latent fingerprint image after non-linear conversion;
Fig. 9 shows a latent fingerprint image after non-linear conversion and an exemplar fingerprint image side by side;
Fig. 10 is a flowchart of noise removing and ridge enhancement processing included in the image matching method according to the first exemplary embodiment;
Fig. 11 shows directional distribution extracted from an exemplar fingerprint image, and a latent fingerprint image after non-linear conversion so that the directional distribution and the latent fingerprint image after non-linear conversion are superimposed to each other;
Fig. 12 shows a latent fingerprint image after noise removing and ridge enhancing;
Fig. 13A shows feature points extracted from a latent fingerprint image after noise removing and ridge enhancing so that the feature points are superimposed onto the latent fingerprint image after noise removing and ridge enhancing;
Fig. 13B shows a skeleton and a ridge settlement region extracted from a latent fingerprint image after noise removing and ridge enhancing so that the skeleton and the ridge settlement region are superimposed onto the latent fingerprint image after noise removing and ridge enhancing;
Fig. 14 shows matching result between a latent fingerprint image after noise removing and ridge enhancing and an exemplar fingerprint image;
Fig. 15A is a flowchart of an image matching method according to a second exemplary embodiment of the present invention;
Fig. 15B is a flowchart of an image matching method according to a second exemplary embodiment of the present invention;
Fig. 16A is a flowchart of an image matching method according to a third exemplary embodiment of the present invention; and
Fig. 16B is a flowchart of an image matching method according to a third exemplary embodiment of the present invention.

### Description of Exemplary Embodiments

An image matching device, an image matching method, a program, and a recording medium according to some exemplary embodiments of the present invention will be described below with reference to the accompanying drawings.

### (First Exemplary Embodiment)

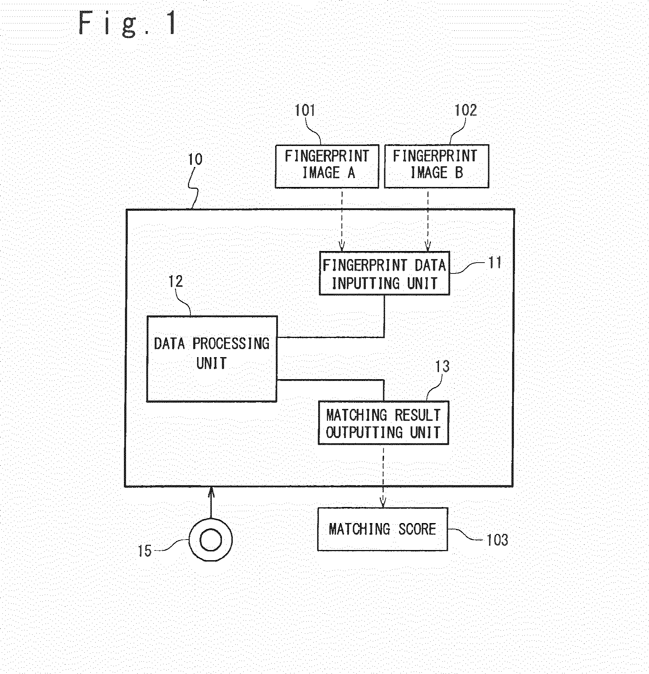

Fig. 1 shows a schematic configuration of an image matching device 10 according to a first exemplary embodiment of the present invention. The image matching device 10 is a computer for example. The image matching device 10 has a fingerprint data inputting unit 11, a data processing unit 12, and a matching result outputting unit 13. The fingerprint data inputting unit 11 has a fingerprint sensor or a scanner which reads and digitizes fingerprint images 101 and 102 for matching, and the digitized fingerprint images 101 and 102 are inputted to the fingerprint data inputting unit 11. The fingerprint data inputting unit 11 may be a recording medium reading unit to which the already-digitized fingerprint images 101 and 102 are inputted as a file. The data processing unit 12 performs matching between fingerprint images 101 and 102, and calculates a matching score showing the matching result. The matching result outputting unit 13 outputs the matching score. The matching result outputting unit 13 is a display unit which displays the matching score; a printer which prints out the matching score; a transmitting unit which transmits the matching score to an outside system; or a recording medium writing unit which writes the matching score onto a variable recording medium like a removable disk.

The image matching device 10 reads a computer program recorded in a tangible recording medium 15 such as an optical disk and a magnetic disk, and executes the image matching method of the present exemplary embodiment in accordance with the computer program.

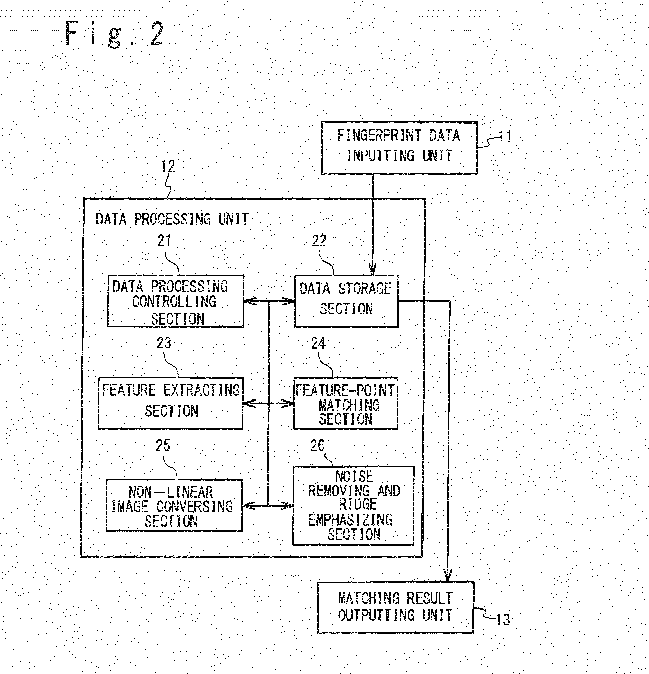

With reference to Fig. 2, the data processing unit 12 has a data processing controlling section 21, a data storing section 22, a feature extracting section 23, a feature-point matching section 24, a non-linear image converting section 25, and a noise removing and ridge enhancing section 26. The data processing controlling section 21 controls transfer of data and message among the above elements of the data processing unit 12. The data storing section 22 is a storage device such as a RAM (Random Access Memory). The data storing section 22 provides a working area to each element of the data processing unit 12 and temporarily stores data generated by the elements of the data processing unit 12. The feature extracting section 23, the feature-point matching section 24, the non-linear image converting section 25, and the noise removing and ridge enhancing section 26 use the data storing section 22 as a working area. Note that the data storing section 22 may have a hard disk device which can permanently store data generated by each element of the data processing unit 12. The feature extracting section 23 extracts feature points of a fingerprint (ridge pattern) from a fingerprint image. The feature-point matching section 24 performs matching of fingerprints based on the feature points and calculates a matching score showing matching result. The non-linear image converting section 25 performs non-linear image conversion for making one of two fingerprint images for matching approximate to the other. The noise removing and ridge enhancing section 26 performs noise removing and ridge enhancing for removing noise and enhancing ridges. A process of extracting feature points, a process of calculating a matching score, a process of non-linear image conversion, a process of noise removing and ridge enhancing will be described later.

A CPU (central Processing Unit) of the image matching device 10 runs a computer program to control hardware of the image matching device 10, thereby achieving each element (each function) of the image matching device 10.

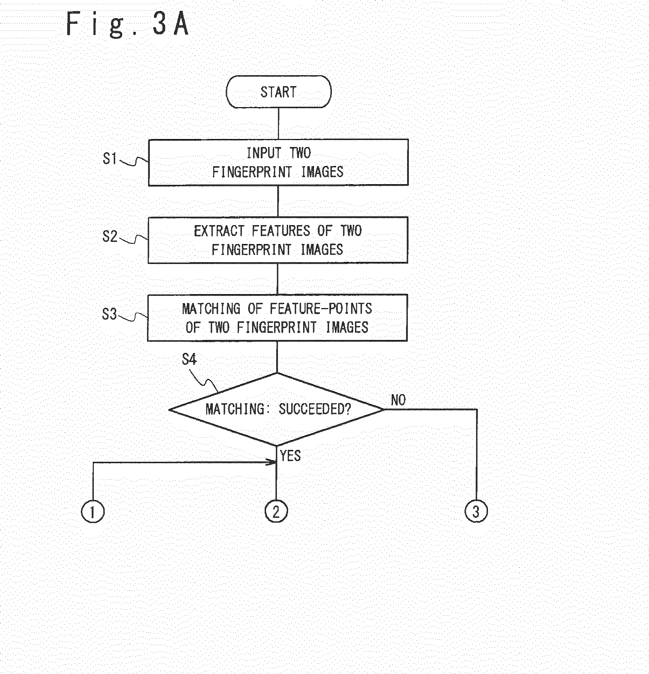

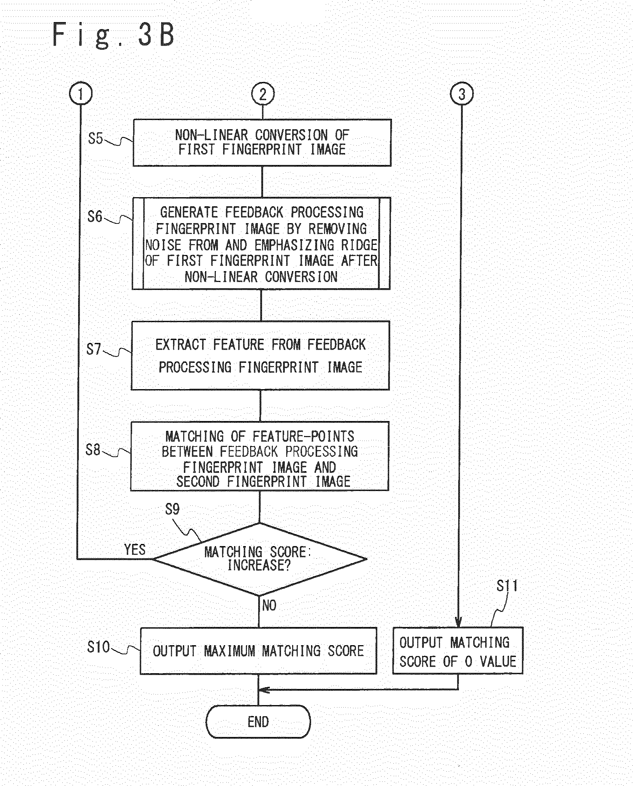

Figs. 3A and 3B are a flowchart of the image matching method according to the present exemplary embodiment. The image matching method includes steps S1 to S11.

In the step S1, the fingerprint image inputting unit 11 inputs the image data of the fingerprint image 101 and the image data of the fingerprint image 102 to the data processing unit 12. The image data of the fingerprint image 101 and the image data of the fingerprint image 102 are gray-scale image data. In the following explanation, the image data of the fingerprint image 101 and the image data of the fingerprint image 102 may hereinafter be referred to as the image data 101 and the image data 102 respectively. The data storing section 22 stores the image data 101 and 102.

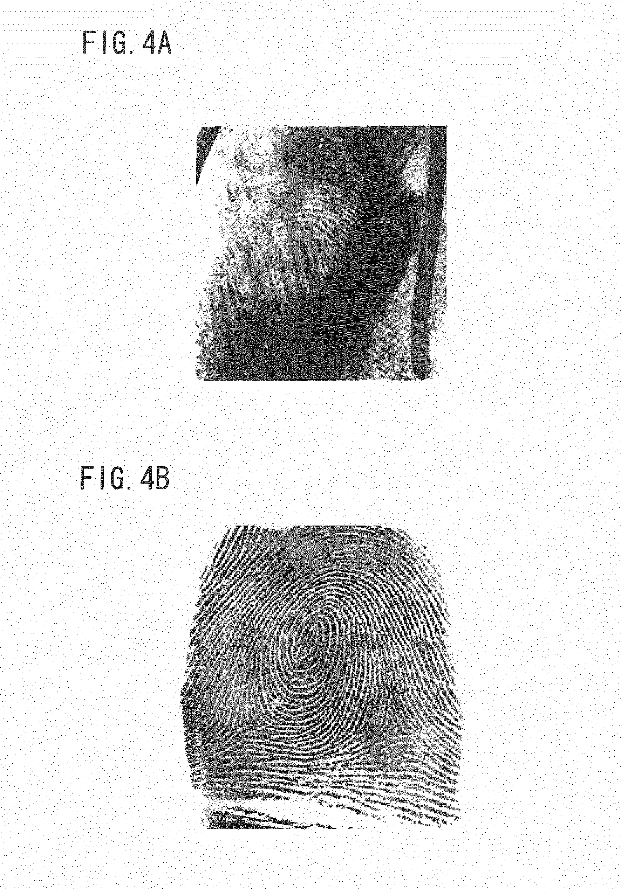

Fig. 4A shows a latent fingerprint image which the fingerprint image data 101 shows. A latent fingerprint image is a gray-scale image of a fingerprint left at a crime scene (hereinafter referred to as "latent fingerprint"), often with low quality and difficulty in automatic matching.

Fig. 4B shows an exemplar fingerprint image which the fingerprint image data 102 shows. The exemplar fingerprint image is a gray-scale image of a fingerprint taken for the purpose of registration (hereinafter referred to as "exemplary fingerprint"), and has high quality. An exemplar fingerprint for criminal investigation is taken by rolling a finger so that a wide region is printed. For this reason, an exemplar fingerprint for criminal investigation can be referred to as a rolled exemplar fingerprint.

In a criminal investigation, in many cases, the matching is performed between a latent fingerprint and an exemplar fingerprint. Therefore, in the present exemplary embodiment, a case where one of two fingerprint images for matching is a latent fingerprint image and the other is a exemplar fingerprint image is explained. However, matching between latent fingerprints and matching between exemplar fingerprints are also possible.

Such fingerprint images are digitized at resolution of 500 dpi in accordance with ANSI/NIST-ITL-1-2000 Data Format for the Interchange of Fingerprint, Facial, & Tattoo (SMT) Information standardized by the National Institute of Standards and Technology of the United States. The standardization document can be downloaded from the following URL (Uniform Resource Locator) as of September, 2010. ftp://sequoyah.nist.gov/pub/nist_internal_reports/sp50 0-245-a16.pdf

According to the above standard, each pixel which forms a fingerprint image has one of the gray levels of 256 levels from 0 to 255. In the brightness reference according to the above standard, a greater gray level indicates greater brightness (brighter).

In the description below however, a greater gray level indicates greater value (darker). Therefore, the gray level of a pixel making up a ridge portion where the gray level is dense (dark) is close to 255 which is a maximum value, and the gray level of a pixel showing a paper surface color or a valley portion where the gray level is dilute (light) is close to 0 which is a minimum value. Here, the valley means the belt-shaped portion between two adjacent ridges.

In the step S2, the feature extracting section 23 extracts feature points of the fingerprints (fingerprint ridges) from a latent fingerprint image in Fig. 4A and an exemplar fingerprint image in Fig. 4B. A featuring point of a fingerprint includes a ridge ending and a ridge bifurcation of fingerprint ridges. The feature extracting section 23 extracts a feature point by using a method disclosed in "3 Fingerprint Analysis and Representation" of Non Patent Literature 1 (Handbook of Fingerprint Recognition, Springer, 2003), for example.

A process of extracting a feature point will be described by using a case where the feature point is extracted from a latent fingerprint image. First, the feature extracting section 23 extracts the directional distribution of a ridge pattern from a latent fingerprint image and performs image processing for enhancing ridges to the latent fingerprint image based on the directional distribution of the ridge pattern. The feature extracting section 23 binarizes the latent fingerprint image after ridge enhancing, to generate a binary image. Next, the feature extracting section 23 extracts a skeleton from the binary image and determines a ridge settlement region where a feature point can be extracted, based on the binary image. Finally, the feature extracting section 23 extracts a feature point from the skeleton in the ridge settlement region. Therefore, the feature extracting section 23 can generate and output latent fingerprint ridge direction data which shows directional distribution of a ridge pattern, ridge settlement region data which shows a ridge settlement region, and skeleton data which shows a skeleton, in addition to the latent fingerprint feature-point data which shows a feature point. The data storing section 22 stores the above data.

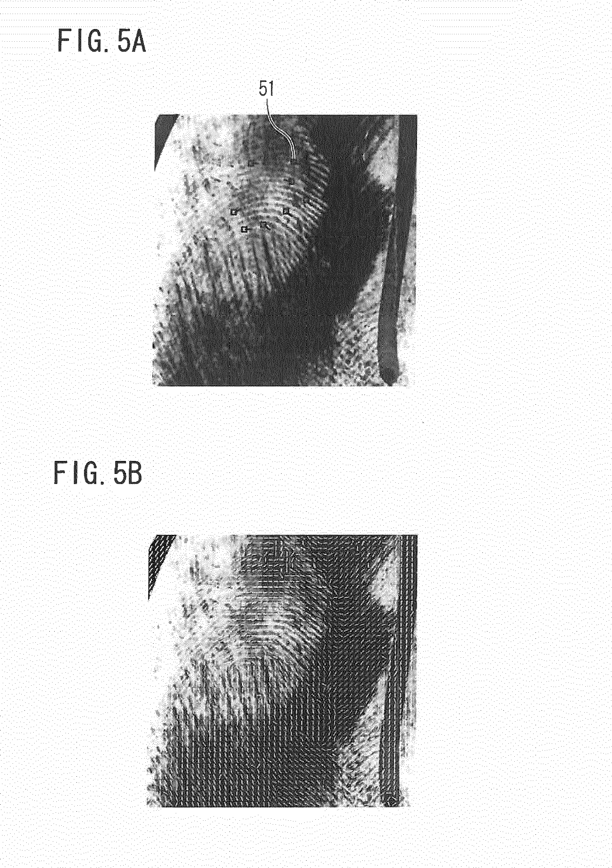

Fig. 5A shows a plurality of feature points 51 which latent fingerprint feature-point data shows, so that the feature points 51 are superimposed onto the latent fingerprint image.

Fig. 5B shows a directional distribution which a latent fingerprint ridge direction data shows, so that the directional distribution is superimposed onto the latent fingerprint image. The direction of latent fingerprint ridge direction data may be defined in each pixel or may be defined in each block made up of 4-by-4 pixels or 8-by-8 pixels. Accuracy is improved as a block size is smaller though a longer processing time is required. In the present exemplary embodiment, a case where the direction data is defined for each pixel will be described.

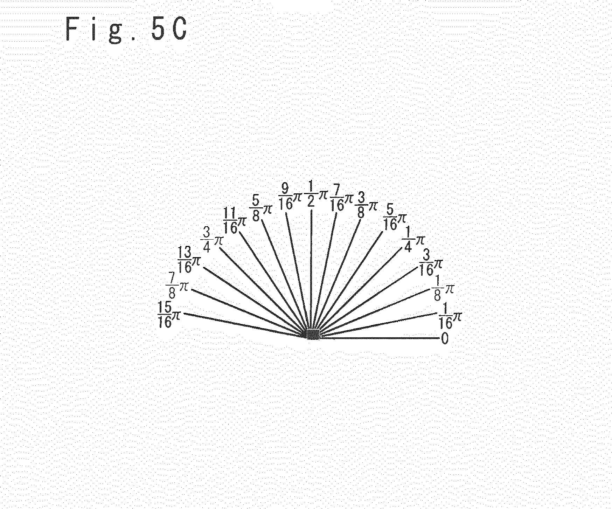

Fig. 5C shows an example of direction coding. Here, coding is performed in sixteen directions from 0 to 15. As shown in Fig. 5C, the coding may be performed in eight directions (π/8 radians) instead of coding in sixteen directions (π/16 radians). Accuracy is improved though a longer processing time is required in the case of coding in sixteen directions compared with the case of coding in eight directions. In the present exemplary embodiment, the case where direction data is coded in sixteen directions will be described.

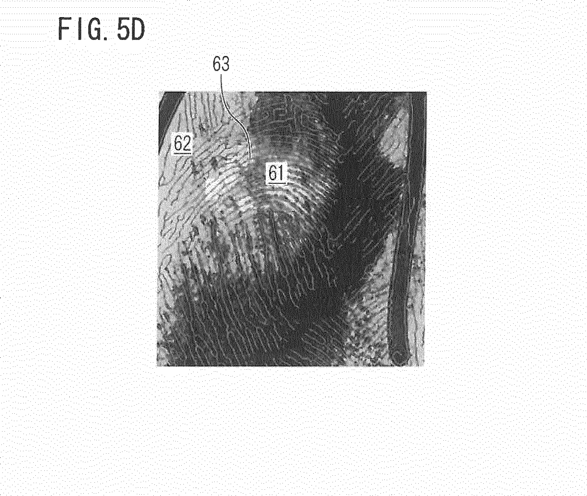

Fig. 5D shows a ridge settlement region 61 which ridge settlement region data shows, and a skeleton 63 which skeleton data shows, so that the ridge settlement region 61 and the skeleton 63 are superimposed onto the latent fingerprint image. The ridge settlement region 61 is a high-quality region with high-quality ridges, and shown as a region which is not shaded. A low-quality region 62 around the ridge settlement region 61 is a region with low-quality ridges, and shown as a shaded region.

The feature extracting section 23 extracts the directional distribution of a ridge pattern and feature points from an exemplar fingerprint image with the above process, and generates and outputs exemplar fingerprint ridge direction data which shows the extracted directional distribution and exemplar fingerprint feature-point data which shows the extracted feature points. The data storing section 22 stores the above data.

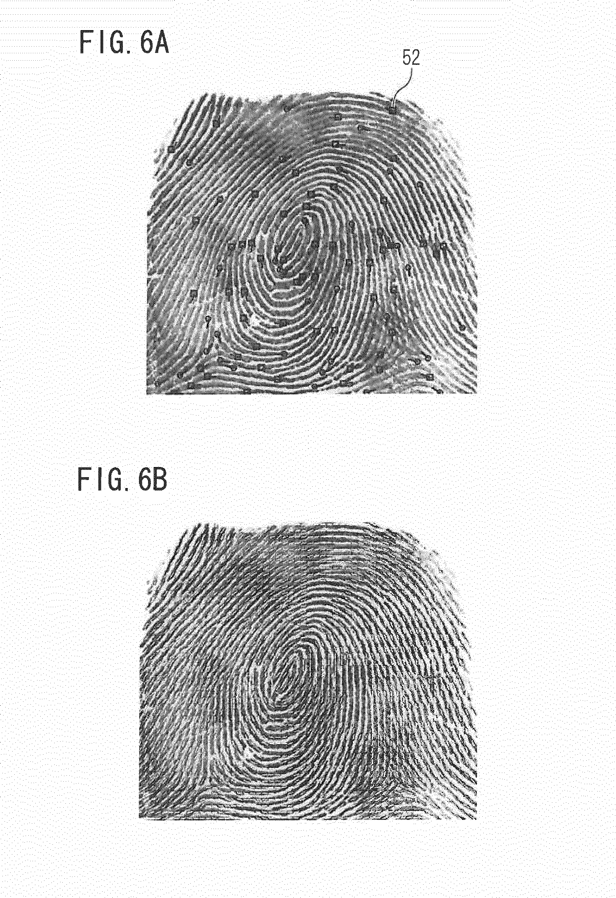

Fig. 6A shows the plurality of feature points 52 which exemplar fingerprint feature-point data shows, so that the feature points 52 are superimposed onto an exemplar fingerprint image.

Fig. 6B shows the directional distribution which exemplar fingerprint ridge direction data shows, so that the directional distribution is superimposed onto an exemplar fingerprint image.

In the step S3, the feature-point matching section 24 matches the latent fingerprint to the exemplar fingerprint based on the latent fingerprint feature-point data and the exemplar fingerprint feature-point data. The feature-point matching section 24 calculates a matching score which shows matching result. The feature-point matching section 24 calculates a matching score by matching the latent fingerprint feature-point data to the exemplar fingerprint feature-point data. The feature-point matching section 24 calculates a matching score by using a method disclosed in "4.3 Minutiae-Based method" of Non Patent Literature 1 (Handbook of Fingerprint Recognition, Springer, 2003), for example.

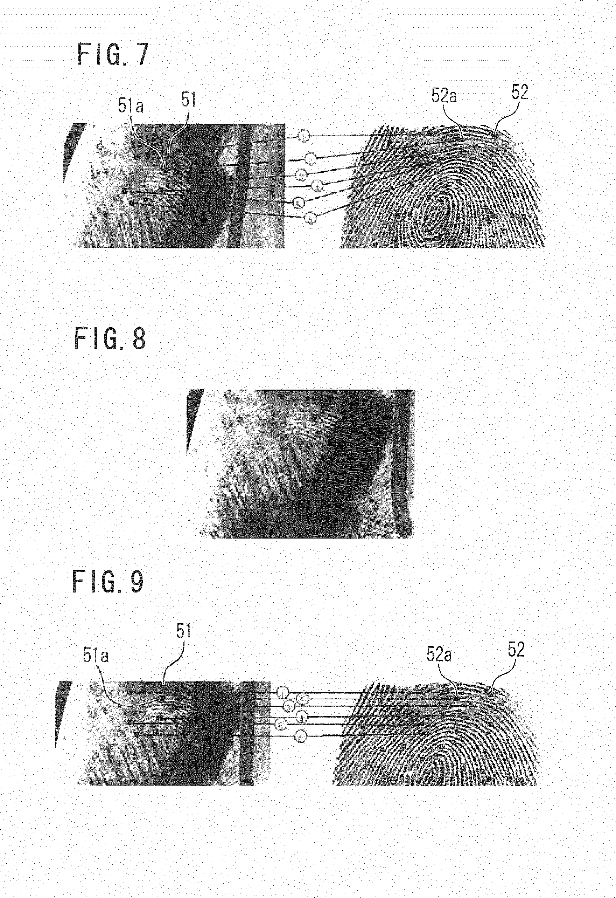

A process of calculating a matching score will be described with reference to Fig. 7. The feature-point matching section 24 detects correspondence relations between the plurality of feature points 51 which the latent fingerprint feature-point data shows, and the plurality of feature points 52 which the exemplar fingerprint feature-point data shows. As shown in the figures, six correspondence relations are detected between six feature points included in the plurality of feature points 51 and six feature points included in the plurality of feature points 52. For example, a correspondence relation is detected between a feature point 51a included in the plurality of feature points 51 and a feature point 52a included in the plurality of feature points 52. The feature-point matching section 24 calculates a matching score based on the number of feature points for which correspondence relations are detected (6 in this case), certainty factors of the respective correspondences, and the number of feature points for which correspondence relations are not detected. In this case, as the matching score, 160 points is calculated. Therefore, the feature-point matching section 24 can generate and output a corresponding feature point list as a list of feature points for which correspondence relations are detected, in addition to the matching score. In the corresponding feature point list, coordinates of a feature point in a latent fingerprint image for which a correspondence relation are detected, are related to the coordinates of the corresponding feature point in the exemplar fingerprint image. For example, the coordinates of the feature point 51a and the coordinates of the feature point 52a are recorded by being related to each other. The data storing section 22 stores the corresponding feature point list and stores the matching score as an initial value of the greatest matching score.

In the step S4, the feature-point matching section 24 judges whether or not the matching in the step S3 has succeeded. The feature-point matching section 24 judges that the matching was successful when the number of feature points for which correspondence relations are detected is a predetermined number (e.g. 4) or more, otherwise the feature-point matching section 24 judges that the matching was unsuccessful. The processing proceeds to the step S5 when the matching is judged to be successful. The processing proceeds to the step S11 when the matching is judged to be unsuccessful.

The matching result outputting unit 13 outputs 0 as the matching score in the step S11 and the image matching device 10 ends the image matching method according to the present exemplary embodiment.

In the step S5, the non-linear image converting section 25 performs non-linear image conversion for making the latent fingerprint image approximate to the exemplar fingerprint image, based on the corresponding feature point list obtained in the step S3, and generates latent fingerprint image data after non-linear image conversion which shows a latent fingerprint image after non-linear image conversion as an after non-linear image conversion latent fingerprint image. The data storing section 22 stores the latent fingerprint image data after non-linear image conversion. In the non-linear image conversion, image distortion of the latent fingerprint image is corrected so that the latent fingerprint image can be superimposed onto the exemplar fingerprint image.

For example, the non-linear image converting section 25 performs non-linear image conversion with a method disclosed in Patent Literature 1 (Japanese Patent Application Publication JP2010-225102A). The non-linear image conversion will be described below. The non-linear image converting section 25 calculates a feature-point moving amount as a moving amount (a coordinate conversion amount) for making the coordinates of the feature point 51a coincide with the coordinates of the feature point 52a, and calculates, as with the interpolation method, a pixel moving amount as a moving amount of a neighborhood pixel based on a distance between the pixel which neighbors the feature point 51a contained in the latent fingerprint image and the feature point 51a, and the feature-point moving amount, to perform non-linear image conversion based on the feature-point moving amount and the pixel moving amount. As a result of the non-linear image conversion, the feature point 51a moves so that the coordinates of the feature point 51a coincide with the coordinates of the feature point 52a, and the neighborhood pixels also move to appropriate positions. As described above, a feature point of a latent fingerprint image for which a correspondence relation is detected is moved to the coordinates of the corresponding feature point in an exemplar fingerprint image. A pixel of the latent fingerprint image other than a feature point for which a correspondence relation is detected, is moved based on the moving amount of the feature point for which a correspondence relation is detected and which is in the neighborhood of the pixel. The coordinate conversion between a latent fingerprint image and a latent fingerprint image after non-linear image conversion is not linear coordinate conversion (coordinate conversion cannot be expressed by a linear expression).

Fig. 8 shows a latent fingerprint image after non-linear image conversion.

Fig. 9 shows a latent fingerprint image after non-linear image conversion and an exemplar fingerprint image side by side. A plurality of feature points 51 are superimposed onto the latent fingerprint image after non-linear image conversion and a plurality of feature points 52 are superimposed onto the exemplar fingerprint image. It can be seen that the relative position of the feature point 51a in the latent fingerprint image after non-linear image conversion coincides with the relative position of the feature point 52a in the exemplar fingerprint image and that the neighborhood region of the feature point 51a gets close to the neighborhood region of the feature point 52a as a result of the non-linear image conversion.

In the step S6, the noise removing and ridge enhancing section 26 performs noise removing and ridge enhancing which uses exemplar fingerprint ridge direction data, to the latent fingerprint image after non-linear image conversion, and generates feedback processing latent fingerprint image data which shows a feedback processing latent fingerprint image as a latent fingerprint image after non-linear image conversion after noise removing and ridge enhancing. The data storing section 22 stores the feedback processing latent fingerprint image data. In noise removing and ridge enhancing, a noise pattern in a latent fingerprint image after non-linear image conversion of which direction does not coincide with exemplar fingerprint ridge direction data, is removed, and a ridge of a latent fingerprint in a latent fingerprint image after non-linear image conversion of which direction coincides with exemplar fingerprint ridge direction data, is enhanced.

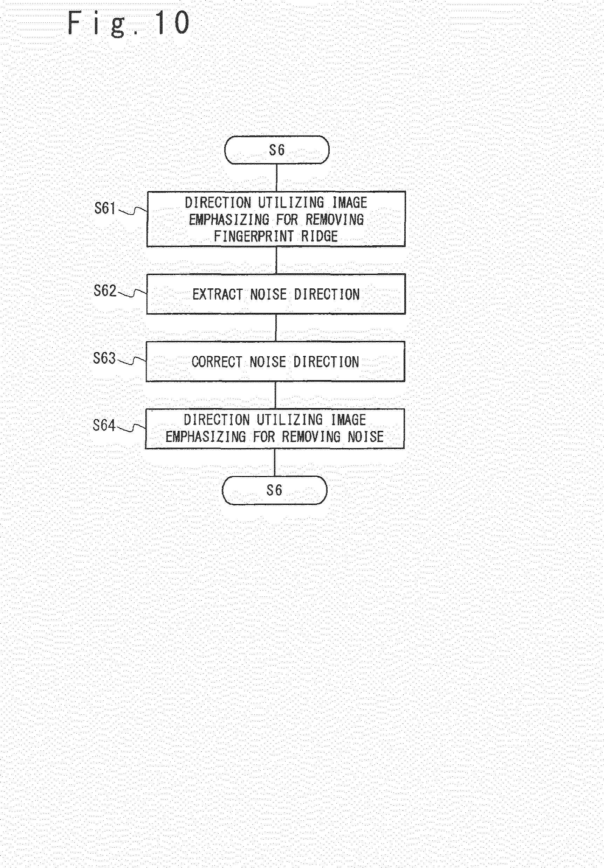

The step S6 will be described in detail with reference to Fig. 10. The step S6 includes steps S61 to S64.

In the step S61, the noise removing and ridge enhancing section 26 performs direction utilizing image enhancing processing for enhancing change in gray level along a direction of the exemplar fingerprint ridge direction data, to the latent fingerprint image after non-linear image conversion, for the purpose of removing a ridge of the latent fingerprint from the latent fingerprint image after non-linear image conversion. Here, the exemplar fingerprint ridge direction data relates coordinates of each pixel contained in an exemplar fingerprint image to the direction of the ridge pattern of the exemplar fingerprint image at that coordinates. For each pixel in the latent fingerprint image after non-linear image conversion, the noise removing and ridge enhancing section 26 determines a reference region as a local region which includes the pixel (hereinafter referred to as "focused pixel") in direction utilizing image enhancing processing, based on the exemplar fingerprint ridge direction data. The noise removing and ridge enhancing section 26 detects the direction related to the coordinates of the focused pixel from the exemplar fingerprint ridge direction data and determines a reference region based on the detected direction. The reference region is determined to be a belt-shaped region along the detected direction. The noise removing and ridge enhancing section 26 calculates the gray level after direction utilizing image enhancing processing at the focused pixel, based on a gray level histogram of the reference region. Direction utilizing image enhancing processing is based on, for example, the Adaptive Histogram Equalization or the Adaptive Contrast Stretch.

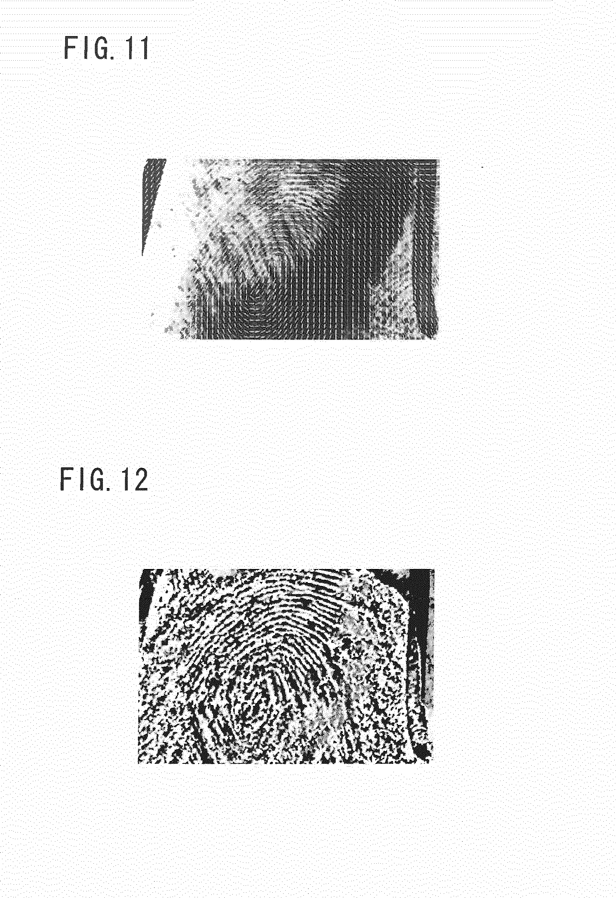

Fig. 11 shows a directional distribution which the exemplar fingerprint ridge direction data shows, so that the directional distribution is superimposed onto the latent fingerprint image after non-linear image conversion. As a result of the nonlinear image conversion in the step S5, positional relations of the latent fingerprint image after non-linear image conversion and the exemplar fingerprint image coincide with each other. For this reason, the directional distribution which the exemplar fingerprint ridge direction data shows represents the ridges of the latent fingerprint. Therefore, a reference region is determined to be along ridges of the latent fingerprint by using the exemplar fingerprint ridge direction data. Then ridges of the latent fingerprint are appropriately removed from the latent fingerprint image after non-linear image conversion in the direction utilizing image enhancing processing at the step S61, and the noise pattern which crosses ridges of the latent fingerprint (e.g. the black belt-like pattern extending from top left to bottom right to cross the ridges of the latent fingerprint in the central position in Fig. 8) is enhanced. The reason will be described below.

With reference to Fig. 8, by examining the change in gray level along the ridges of the latent fingerprint in the superimposed region where the latent fingerprint and the black belt-shaped pattern are superimposed to each other, it is revealed that the gray level of the portion onto which the black belt-shaped pattern is superimposed, is greater than the gray level of a portion onto which the black belt-like pattern is not superimposed. By enhancing the change in gray level along the ridges of the latent fingerprint, the portion onto which the black belt-shaped pattern is superimposed, in the ridges of the latent fingerprint is enhanced.

With reference to Fig. 8, by examining the change in gray level along valleys of the latent fingerprint in the superimposed region, it is revealed that the gray level of the portion onto which the black belt-shaped pattern is superimposed, is greater than the gray level of the portion onto which the black belt-like pattern is not superimposed. By enhancing the change in gray level along the valleys of the latent fingerprint, the portion onto which the black belt-shaped pattern is superimposed, in the valleys of the latent fingerprint is enhanced.

As a result of the direction utilizing image enhancing processing which uses a reference region determined to be along ridges of the latent fingerprint, ridges of the latent fingerprint disappear and a noise pattern is enhanced.

For example, the reference region is determined as follows. The noise removing and ridge enhancing section 26 extracts a group of pixels which is passed through when proceeding from a focused pixel to a first side along the direction of the coordinates of the focused pixel (the direction detected from the exemplar fingerprint ridge direction data) and to a second side opposite to the first side, by a predetermined number of pixels each. The reference region is made up of the group of pixels.

In the step S62, the noise removing and ridge enhancing section 26 automatically extracts directional distribution of a latent fingerprint image after direction utilizing image enhancing processing as a latent fingerprint image after non-linear image conversion after direction utilizing image enhancing processing of the step S61, and generates noise direction data which shows the extracted directional distribution. The data storing section 22 stores the noise direction data. The noise direction data shows directional distribution of a noise pattern included in the latent fingerprint image after direction utilizing image enhancing processing. The noise direction data relates coordinates of a pixel to the direction of the noise pattern at that coordinates with respect to each pixel contained in the latent fingerprint image after direction utilizing image enhancing processing.

In the step S63, the noise removing and ridge enhancing section 26 corrects the noise direction data based on the exemplar fingerprint ridge direction data and generates noise direction data after correction. The data storing section 22 stores the noise direction data after correction.

Here, the exemplar fingerprint ridge direction data relates coordinates and a direction of an exemplar fingerprint image. The noise direction data relates coordinates and a direction of a latent fingerprint image after direction utilizing image enhancing processing. When the difference between the direction of exemplar fingerprint ridge direction data and the direction of noise direction data with respect to identical coordinates, is within a predetermined range (e.g. within π /16 radian), the noise removing and ridge enhancing section 26 replaces the direction of the noise direction data with the direction perpendicular to the direction of the exemplar fingerprint ridge direction data, to generate noise direction data after correction.

Here, the meaning of the correction will be described. As disclosed in Japanese Patent Application Publication JP2009-223562A, by performing the direction utilizing image enhancing processing based on noise direction data to a latent fingerprint image after non-linear image conversion, it becomes possible to remove a noise pattern and enhance ridges of a latent fingerprint. However, when the direction of noise direction data and the direction of exemplar fingerprint ridge direction data are close to each other, ridges of the latent fingerprint are at least partially removed from the latent fingerprint image after non-linear image conversion as a result of the direction utilizing image enhancing processing. By correcting noise direction data in the step S63, it becomes possible to decrease the possibility that ridges of a latent fingerprint are removed. Note that it is also possible not to perform the step S63.

Next, in the step S64, the noise removing and ridge enhancing section 26 performs direction utilizing image enhancing processing for enhancing change in gray level along the direction of the noise direction data after correction, to the latent fingerprint image after non-linear image conversion, for the purpose of removing a noise pattern from the latent fingerprint image after non-linear image conversion. As a result, the noise removing and ridge enhancing section 26 generates feedback processing latent fingerprint image data which shows a feedback processing latent fingerprint image. The data storing section 22 stores the feedback processing latent fingerprint image data.

The processing of the step S64 is the same as the aforementioned step S61 though data to be used is different. In direction utilizing image enhancing processing of the step S64, the noise removing and ridge enhancing section 26, with respect to each pixel of the latent fingerprint image after non-linear image conversion, determines a reference region as a local region which includes that pixel (hereinafter referred to as "focused pixel") based on the noise direction data after correction. The noise removing and ridge enhancing section 26 detects the direction related to the coordinates of the focused pixel from the noise direction data after correction and determines a reference region based on the detected direction. The reference region is determined to be a belt-like region along the detected direction The noise removing and ridge enhancing section 26 calculates the gray level of the focused pixel after the direction utilizing image enhancing processing of the step S64, based on gray level histogram of the reference region.

As a result of the direction utilizing image enhancing processing of the step S64, a noise pattern in the latent fingerprint image after non-linear image conversion of which the direction does not coincide with the exemplar fingerprint ridge direction data, is removed and ridges of the latent fingerprint in the latent fingerprint image after non-linear image conversion of which direction coincides with the exemplar fingerprint ridge direction data is enhanced. The reason is as disclosed in Japanese Patent Application Publication JP2009-223562A.

Fig. 12 shows the feedback processing latent fingerprint image obtained in the step S6. In the feedback processing latent fingerprint image, the black belt-like pattern extending from top left to bottom right at the center of the latent fingerprint image after non-linear image conversion shown in Fig. 8 disappears and the ridges of the latent fingerprint are enhanced. In the feedback processing latent fingerprint image, the matching result of the step S3 (e.g. a corresponding feature point list) is fed back.

In the step S7, the feature extracting section 23 extracts feature points of the fingerprint (ridge pattern), directional distribution of the ridge pattern, a ridge settlement region, and a skeleton from the feedback processing latent fingerprint image in Fig. 12, and generates and outputs feedback processing latent fingerprint feature-point data which shows the feature points, feedback processing latent fingerprint ridge direction data which shows the directional distribution, ridge settlement region data which shows the ridge settlement region, and skeleton data which shows the skeleton. The data storing section 22 stores the above data. The processing in the step S7 is the same as the processing in the step S2, and will not be described in detail.

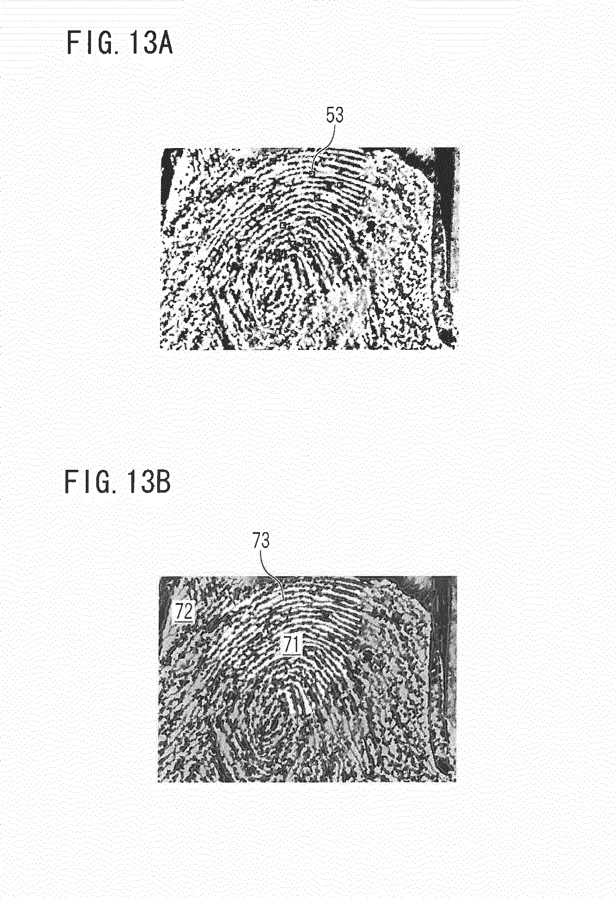

Fig. 13A shows a plurality of feature points 53 which the feedback processing latent fingerprint feature-point data shows, so that the feature points 53 are superimposed onto the feedback processing latent fingerprint image. Here, the number of the feature points 53 extracted from the feedback processing latent fingerprint image shown in Fig. 13 is greater than the number of the feature points 51 extracted from the latent fingerprint image shown in Fig. 5A.

Fig. 13B shows a ridge settlement region 71 and a skeleton 73 which the ridge settlement region data and skeleton data generated in the step S7 show respectively, so that the ridge settlement region 71 and the skeleton 73 are superimposed onto the feedback processing latent fingerprint image. The ridge settlement region 71 is a high-quality region with high-quality ridges and shown as a region which is not shaded. A low-quality region 72 around the ridge settlement region 71 is a region with low-quality ridges and shown as a shaded region. Here, the ridge settlement region 71 extracted from he feedback processing latent fingerprint image shown in Fig. 13B is greater than the ridge settlement region 61 extracted from the latent fingerprint image shown in Fig. 5D.

Due to the effective noise removing and ridge enhancing as a result of the feedback processing of the steps S5 and S6, the number of extracted feature points is increased and a ridge settlement region is extended.

In the step S8, the feature-point matching section 24 matches the latent fingerprint to the exemplar fingerprint based on the last feedback processing latent fingerprint feature-point data stored in the data storage section 22 and the exemplar fingerprint feature-point data. The feature-point matching section 24 calculates a matching score which shows matching result, and generates and outputs a corresponding feature point list. The process of calculating the matching score and the process of generating a corresponding feature point list are the same as the step S3. The data storing section 22 stores the matching score and the corresponding feature point list.

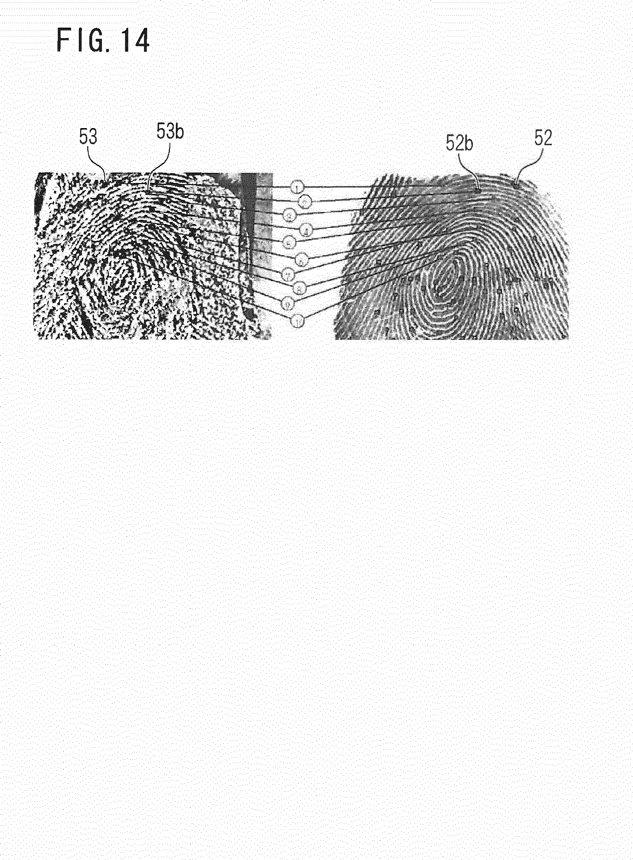

Fig. 14 shows a feedback processing latent fingerprint image onto which the plurality of feature points 53 shown by the feedback processing latent fingerprint feature-point data are superimposed, and an exemplar fingerprint image onto which the plurality of feature points 52 shown by the exemplar fingerprint image feature-point data are superimposed. As shown in the figure, ten correspondence relations are detected between ten feature points included in the plurality of feature points 53 and ten feature points included in the plurality of feature points. For example, a correspondence relation is detected between a feature point 53b included in the plurality of feature points 53 and a feature point 52b included in the plurality of feature points 52. Compared with the result of the step S3, which is six in Fig. 7, the number of feature points for which correspondence relations are detected is increased by four. In the step S8, a matching score works out at 816 points. It is understood that matching accuracy is improved since the matching score in the step S8 (816 points) is greatly increased compared with the matching score in the step S3 (160 points).

In the step S9, the feature-point matching section 24 compares the matching score obtained in the last step S8 and the greatest matching score stored in the data storing section 22.

The processing proceeds to the step S10 when the matching score obtained in the last step S8 is not greater in the step S9.

The matching result outputting unit 13 outputs the greatest matching score in the step S10, and the image matching device 10 ends the image matching method according to the present exemplary embodiment.

When the matching score obtained in the last step S8 is greater in the step S9, the data storing section 22 replaces the value of the greatest matching score with the matching score obtained in the last step S8. After that, the next steps S5 to S9 are performed. In the next step S5, non-linear image conversion for making the feedback processing latent fingerprint image obtained in the last step S6 approximate to the exemplar fingerprint is performed based on the corresponding feature point list obtained in the last step S8. Based on the result of the next step S5, the next steps S6 to S9 are performed.

The steps S5 to S9 may be repeated as long as the value of the greatest matching score is updated. However, the maximum number of repetition may be limited to a predetermined number of times (e.g. two times).

In the present exemplary embodiment, it is possible to input the exemplar fingerprint feature-point data and the exemplar fingerprint ridge direction data to the data processing unit 12 instead of inputting the image data 102 which shows the exemplar fingerprint image. Since feature-point data and ridge direction data for a great number of exemplar fingerprint images are registered in a database in fingerprint matching systems for criminal investigation, the image matching processing according to the present exemplary embodiment can be speeded up by using such data.

In the above description, the case where a latent fingerprint image is converted to a feedback processing latent fingerprint image to calculate a matching score based on the feedback processing latent fingerprint image and an exemplar fingerprint image is described. However, it is also possible to change the relationships between the latent fingerprint image and the exemplar fingerprint image to convert the exemplar fingerprint image to the feedback processing exemplar fingerprint image and calculate a matching score based on the feedback processing exemplar fingerprint image and the latent fingerprint image.

Furthermore, the feature-point matching section 24 may calculate a combined matching score based on a matching score obtained based on a feedback processing latent fingerprint image and an exemplar fingerprint image, and a matching score obtained based on a feedback processing exemplar fingerprint image and a latent fingerprint image. The combined matching score is, for example, the average value of two matching scores. In this case, the combined matching score is used in the step S9 instead of the matching score. Consequently, matching accuracy is further improved.

### (Second Exemplary Embodiment)

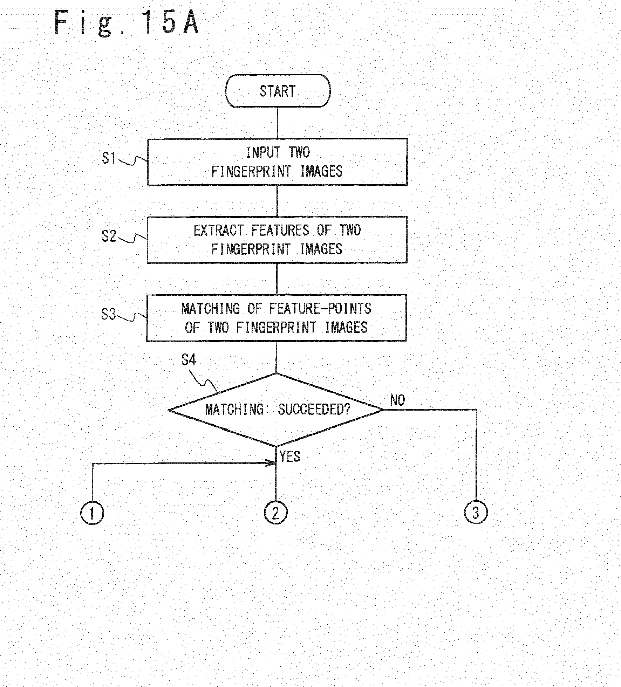

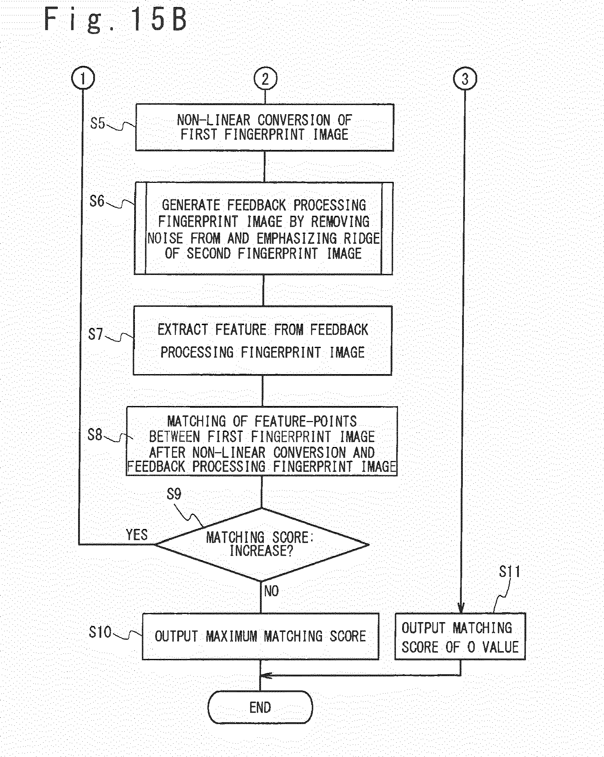

An image matching method according to the second exemplary embodiment of the present invention will be described with reference to Figs. 15A and 15B. The image matching method includes steps S1 to S11. The steps S1 to S4 and S9 to S11 according to the present exemplary embodiment are the same as the steps S1 to S4 and S9 to S11 according to the first exemplary embodiment respectively. The steps S5 to S8 according to the present exemplary embodiment will be described below.

In the step S5, the non-linear image converting section 25 performs non-linear image conversion for making an exemplar fingerprint image approximate to a latent fingerprint image, based on the corresponding feature point list obtained in the step S3, and generates exemplar fingerprint image data after non-linear image conversion which shows the exemplar fingerprint image after non-linear image conversion as the exemplar fingerprint image after non-linear image conversion. The feature-point extracting section 23 extracts a feature point of a fingerprint (ridge pattern) and directional distribution of the ridge pattern from the exemplar fingerprint image after non-linear image conversion, and generates exemplar fingerprint feature-point data after non-linear image conversion which shows the feature point and exemplar fingerprint ridge direction data after non-linear image conversion which shows the directional distribution of the ridge pattern. The data storing section 22 stores the above data.

In the step S6, the noise removing and ridge enhancing section 26 performs noise removing and ridge enhancing, which uses the exemplar fingerprint ridge direction data after non-linear image conversion, to the latent fingerprint image, and generates feedback processing latent fingerprint image data which shows a feedback processing latent fingerprint image as a latent fingerprint image after noise removing and ridge enhancing. The data storing section 22 stores the feedback processing latent fingerprint image data.

In the step S7, the feature extracting section 23 extracts a feature point of a fingerprint (ridge pattern), directional distribution of the ridge pattern, a ridge settlement region, and a skeleton from the feedback processing latent fingerprint image, and generates and outputs feedback processing latent fingerprint feature-point data which shows the feature point, feedback processing latent fingerprint ridge direction data which shows the directional distribution, ridge settlement region data which shows the ridge settlement region, and skeleton data which shows the skeleton. The data storing section 22 stores the above data.

In the step S8, the feature-point matching section 24 matches the latent fingerprint to the exemplar fingerprint, based on the latest feedback processing latent fingerprint feature-point data and exemplar fingerprint feature-point data after non-linear image conversion stored in the data storing section 22. The feature-point matching section 24 calculates a matching score which shows matching result, and generates and outputs a corresponding feature point list. The data storing section 22 stores the matching score and the corresponding feature point list.

Detailed processes of the steps S5 to S8 according to the present exemplary embodiment can be understood clearly from the description of the steps S5 to S8 according to the first exemplary embodiment.

High matching accuracy is also achieved in the present exemplary embodiment.

In the above description, the case where a latent fingerprint image and an exemplar fingerprint image are converted to a feedback processing latent fingerprint image and an exemplar fingerprint image after non-linear image conversion respectively to calculate a matching score based on the feedback processing latent fingerprint image and the exemplar fingerprint image after non-linear image conversion is described. However, it is also possible to change the relationships between the latent fingerprint image and the exemplar fingerprint image to convert a latent fingerprint and an exemplar fingerprint image to a latent fingerprint image after non-linear image conversion and a feedback processing exemplar fingerprint image respectively and calculate a matching score based on the latent fingerprint image after non-linear image conversion and the feedback processing exemplar fingerprint image.

Furthermore, the feature-point matching section 24 may calculate a combined matching score based on the matching score obtained based on the feedback processing latent fingerprint image and the exemplar fingerprint image after non-linear image conversion, and the matching score obtained based on the latent fingerprint image after non-linear image conversion and the feedback processing exemplar fingerprint image. The combined matching score is, for example, the average value of two matching scores. In this case, the combined matching score is used in the step S9 instead of the matching score. Consequently, matching accuracy is further improved.

In the above, the case where a latent fingerprint image is matched to an exemplar fingerprint image is described. However, as in the case of the first exemplary embodiment, also in the present exemplary embodiment, it is also possible to perform matching between latent fingerprints, or between exemplar fingerprints.

### (Third Exemplary Embodiment)

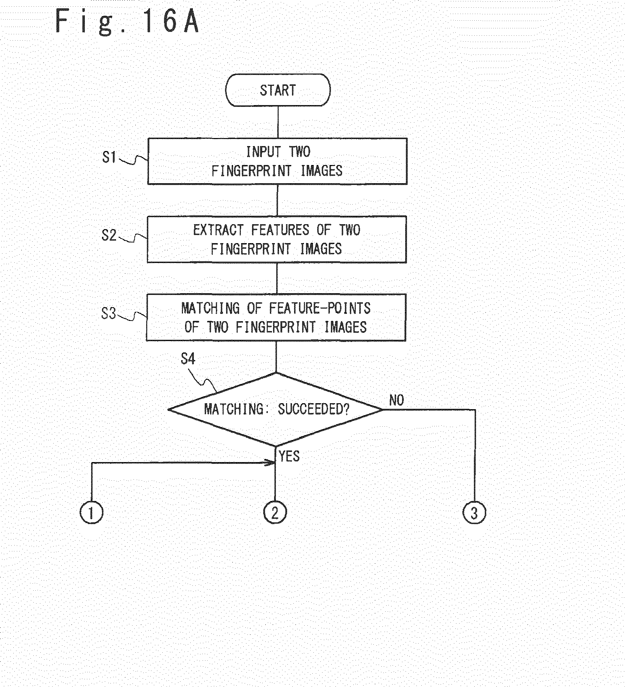

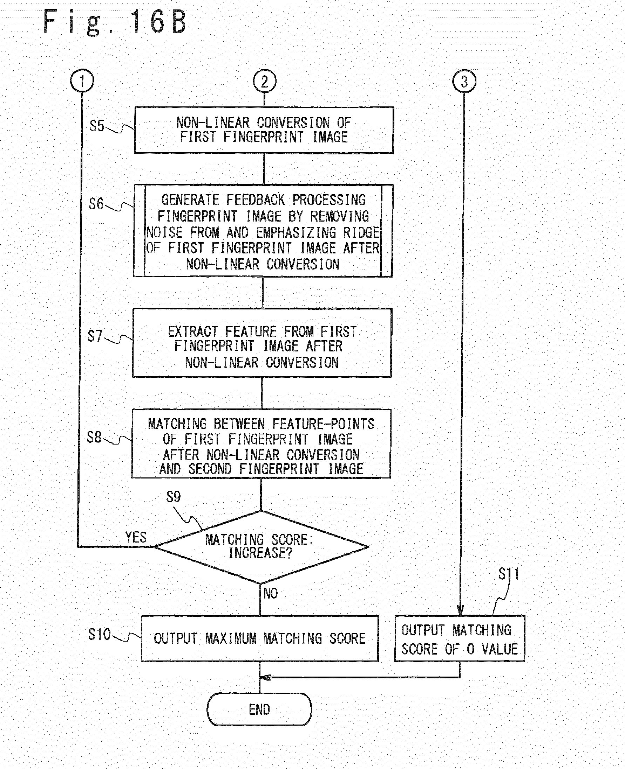

An image matching method according to the third exemplary embodiment of the present invention will be described with reference to Figs. 16A and 16B. The image matching method includes step S1 to S5 and S7 to S11. Step 6 is not used. The steps S1 to S5 and S9 to S11 according to the present exemplary embodiment are the same as the steps S1 to S5 and S9 to S11 according to the first exemplary embodiment respectively. The steps S7 and S8 according to the present exemplary embodiment will be described below.

In the step S7, the feature-point extracting section 23 extracts a feature point of a fingerprint (ridge pattern), directional distribution of the ridge pattern, a ridge settlement region, and a skeleton from a latent fingerprint image after non-linear image conversion, and generates and outputs latent fingerprint feature-point data after non-linear image conversion which shows the feature point, latent fingerprint ridge direction data after non-linear image conversion which shows the directional distribution, ridge settlement region data which shows the ridge settlement region, and skeleton data which shows the skeleton. The data storing section 22 stores the above data.

In the step S8, the feature-point matching section 24 matches a latent fingerprint to an exemplar fingerprint based on the latest latent fingerprint feature-point data after non-linear image conversion stored in the data storage section 22 and the exemplar fingerprint feature-point data. The feature-point matching section 24 calculates a matching score which shows matching result, and generates and outputs a corresponding feature point list. The data storing section 22 stores the matching score and the corresponding feature point list.

Detailed processes of the step S7 and S8 according to the present exemplary embodiment can be understood clearly from the description of the steps S7 and S8 according to the first exemplary embodiment.

There is a case where intervals between ridges of a latent fingerprint image with distortion are significantly different from the actual intervals between ridges. For this reason, extraction accuracy is lowered when feature points are extracted from a latent fingerprint image with distortion. In the present exemplary embodiment, lowering of feature-point extraction accuracy can be avoided since the intervals between ridges are normalized due to non-linear image conversion for making a latent fingerprint image approximate to the exemplar fingerprint image. Therefore, high matching accuracy is achieved in fingerprint matching which uses feature points.

In the present exemplary embodiment, exemplar fingerprint feature-point data and exemplar fingerprint ridge direction data may be inputted to the data processing unit 12 instead of inputting image data 102 which shows an exemplar fingerprint image, as in the case of the first exemplary embodiment.

Although the case where the target of matching is a fingerprint image has been described above, the target of matching may be other biological pattern images like a palmprint image.

In the above, the present invention has been explained with reference to some exemplary embodiments. However, the present invention is not limited to the above exemplary embodiments. Various modifications which can be understood by those skilled in the art can be applied to the configurations and details of the present invention within the scope of the present invention.

This application claims the priority based on Japanese Patent Application JP2010-250205 filed in November 8, 2010, and the disclosure thereof is incorporated herein with this reference.

## Claims

1. An image matching device comprising:
a data storage means configured to store: a first feature point data which indicates a first set of feature points which are on a first ridge pattern included in a first image of a first biological pattern; and a second feature point data which indicates a second set of feature points which are on a second ridge pattern included in a second image of a second biological pattern;
a feature point matching means configured to: calculate a first matching score between the first biological pattern and the second biological pattern based on the first feature point data and the second feature point data; and generate a corresponding feature point list which indicates a corresponding feature point set by extracting a set of corresponding feature points between the first set of feature points and the second set of feature points as the corresponding feature point set; and
a non-linear image converting means configured to perform a non-linear first image conversion which makes the first image approximate to the second image based on the corresponding feature point list,
wherein the feature point matching means is configured to calculate a second matching score between the first biological pattern and the second biological pattern based on the first image after the non-linear first image conversion and the second image.

2. The image matching device according to claim 1, further comprising:
a noise removing and ridge enhancing means configured to apply a first noise removing and ridge enhancement processing which uses a second ridge direction data indicating a directional distribution of the second ridge pattern to the first image after the non-linear first image conversion; and
a feature extracting means configured to: extract the first set of feature points after noise removing and ridge enhancing from the first image after the first noise removing and ridge enhancing; and generate a first feature point data after noise removing and ridge enhancing which indicates the first set of feature points after noise removing and ridge enhancing,
wherein the feature point matching means is configured to calculate the second matching score based on the first feature point data after noise removing and ridge enhancing and the second feature point data.

3. The image matching device according to claim 2, wherein the non-linear image converting means is configured to perform a non-linear second image conversion which makes the second image approximate to the first image based on the corresponding feature point list,
wherein the noise removing and ridge enhancing means is configured to apply a second noise removing and ridge enhancement processing which uses a first ridge direction data indicating a directional distribution of the first ridge pattern to the second image after the non-linear second image conversion,
wherein the feature extracting means is configured to: extract the second set of feature points after noise removing and ridge enhancing from the second image after the second noise removing and ridge enhancing; and generate a second feature point data after noise removing and ridge enhancing which indicates the second set of feature points after noise removing and ridge enhancing,
wherein the feature point matching means is configured to:
calculate a third matching score between the first biological pattern and the second biological pattern based on the second feature point data after noise removing and ridge enhancing and the first feature point data; and
calculate a fourth matching score between the first biological pattern and the second biological pattern based on the second matching score and the third matching score.

4. The image matching device according to claim 1, further comprising:
a noise removing and ridge enhancing means configured to perform a first noise removing and ridge enhancement processing which uses a first ridge direction data indicating a directional distribution of the first ridge pattern after the non-linear first image conversion to the second image; and
a feature extracting means configured to: extract the second set of feature points after noise removing and ridge enhancing from the second image after the first noise removing and ridge enhancing; generate a second feature point data after noise removing and ridge enhancing which indicates the second set of feature points after noise removing and ridge enhancing; extract the first set of feature points after a non-linear image conversion from the first image after the non-linear first image conversion; and generate a first feature point data after non-linear image conversion which indicates the first set of feature points after non-linear image conversion,
wherein the feature point matching means is configured to calculate the second matching score based on the second feature point data after noise removing and ridge enhancing and the first feature point data after non-linear image conversion.

5. The image matching device according to claim 4, wherein the non-linear image conversion means is configured to perform a non-linear second image conversion which makes the second image approximate to the first image based on the corresponding feature point list,
wherein the noise removing and ridge enhancing means is configured to perform a second noise removing and ridge enhancement processing which uses a second ridge direction data indicating a directional distribution of the second ridge pattern after the non-linear second image conversion to the first image,
wherein the feature extracting means is configured to: extract a first feature point data set after noise removing and ridge enhancing from the first image after the second noise removing and ridge enhancing; generate a first feature point data after ridge enhancing which indicates the first set of feature points after ridge enhancing; extract the second set of feature points after non-linear image conversion from the second image after the non-linear second image conversion; and generate a second feature point data after non-linear image conversion which indicates the second set of feature points after the non-linear image conversion,
wherein the feature point matching means is configured to:
calculate a third matching score between the first biological pattern and the second biological pattern based on the first feature point data after noise removing and ridge enhancing and the second feature point data after non-linear image conversion; and
calculate a fourth matching score between the first biological pattern and the second biological pattern based on the second matching score and the third matching score.

6. The image matching device according to any of claims 1 to 5, wherein the corresponding feature point list relates coordinates of a first feature point included in the first set of feature points and coordinates of a second feature point included in the second set of feature points,
wherein the non-linear image conversion means is configured to:
calculate a first feature point moving amount for making the coordinates of the first feature point to the coordinates of the second feature point;
calculate a first pixel moving amount of a first pixel based on a distance between: the first pixel included in the first image and the first feature point; and the first feature point moving amount; and
performs the non-linear first image conversion based on the first pixel moving amount.

7. The image matching device according to claim 2 or 3, wherein each of the first image and the second image is a gray-scale image,
wherein in the first noise removing and ridge enhancing, the noise removing and ridge enhancing means is configured to:
perform a first direction utilizing image enhancing processing based on the second ridge direction data to the first image after the non-linear first image conversion; and
perform a second direction utilizing image enhancing processing, based on a noise direction data which indicates a directional distribution of a noise pattern included in the first image after the first direction utilising image enhancing processing, to the first image after the non-linear first image conversion.

8. The image matching device according to claim 4 or 5, wherein each of the first image and the second image is a gray-scale image,
wherein in the first noise removing and ridge enhancing, the noise removing and ridge enhancing means is configured to:
perform a first direction utilizing image enhancing processing based on the first ridge direction data to the second image; and
perform a second direction utilizing image enhancing processing, based on a noise direction data which indicates a directional distribution of a noise pattern included in the second image after the first direction utilizing image enhancing processing, to the second image.

9. An image matching method comprising:
a step of calculating a first matching score between a first biological pattern and the second biological pattern based on: a first feature point data which indicates a first set of feature points of a first ridge pattern included in a first image of a first biological pattern; and a second feature point data which indicates a second set of feature points of a second ridge pattern included in a second image of a second biological pattern;
a step of storing a first matching score;
a step of extracting a set of feature points which are corresponding points between the first set of feature points and the second set of feature points as a corresponding feature point set and generating a corresponding feature point list which indicates the corresponding feature point set;
a step of performing a non-linear first image conversion which makes the first image approximate to the second image based on the corresponding feature point list;
a step of calculating a second matching score between the first biological pattern and the second biological pattern based on the first image after the non-linear first image conversion and the second image; and
a step of storing the second matching score.

10. A storage medium recording a computer program for making a computer execute the image matching method according to claim 9.
